# EUROPÄISCHE PATENTSCHRIFT

(11) **EP 0 749 795 B1**
(45) Veröffentlichungstag und Bekanntmachung des Hinweises auf die Patenterteilung: **08.01.2003**
(21) Anmeldenummer: 96109375.4
(22) Anmeldetag: 12.06.1996
(51) Int. Cl.: B23B 51/04

(54) **Bohrwerkzeug**
Drilling tool
Outil de perçage

(30) Priorität: 23.06.1995 DE 19522836
(43) Veröffentlichungstag der Anmeldung: 27.12.1996
(73) Patentinhaber: August Beck GmbH & Co., D-72474 Winterlingen (DE)
(72) Erfinder: Basteck, Andreas, Dr., 79439 Lörrach (DE)
(74) Vertreter: Kinkelin, Ulrich, Dipl.-Ing.

(56) Entgegenhaltungen:
- EP-A- 0 014 423
- EP-A- 0 054 913
- FR-A- 2 371 263

## Beschreibung

Die Erfindung betrifft ein Bohrwerkzeug für Bohrungen in Metallvollmaterial gemäß dem Oberbegriff des Patentanspruchs 1 und wie aus der EP-A-0054913 bekannt ist.

Aus der EP 0 054 913 A2 ist ein Bohrwerkzeug für Bohrungen in Metallvollmaterial bekannt, das einen Bohrerschaft mit mindestens zwei in gleichen Umfangswinkel-Abständen versetzten Aufnahmen aufweist, in die jeweils mindestens eine, mehrere gleich lange Schneidkanten aufweisende, auswechselbare Wendeschneidplatten in radialer Richtung angeordnet ist. Für jede dieser Wendeschneidplatte ist eine Ausnehmung für die Spanabfuhr vorgesehen, die sich axial in einen hinteren Bereich des Bohrerschaftes erstreckt. Die jeweilige Winkelhalbierende der in Eingriff stehenden Schneidkanten schließt mit einer Parallelen zur Bohrachse einen spitzen Winkel ein. Dadurch kann ein radialer Schnittausgleich geschaffen werden, so daß sich der Bohrer selbst zentriert und entlang der Bohrachse einen Materialabtrag bewirkt.

Derartige Bohrer haben jedoch den Nachteil, daß sie aufgrund ihres Querschnittsprofils über den gesamten Bohrerschaft eine geringe Steifigkeit aufweisen, was zur Folge hat, daß während des Schneidvorganges das Bohrwerkzeug in Schwingungen versetzt wird, wodurch Rattermarken im Bohrgrund entstehen können. Ferner ist damit eine Verminderung der Schnittleistung und Standzeiten verbunden. Aufgrund der Wendeschneicfpiafienanordnung ist zwar ein Ausgleich der radialen Schnittkraft gegeben, jedoch entstehen dadurch beim Herausziehen des Bohrwerkzeuges Rückzugsriefen, die die Qualität der Bohrung beeinflussen.

Der Erfindung liegt deshalb die Aufgabe zugrunde, ein Bohrwerkzeug zu schaffen, welches die Steifigkeit des Bohrerschaftes erhöht und einen schwingungsberuhigten Vorgang ermöglicht Des weiteren liegt der Erfindung die Aufgabe zugrunde, ein Verfahren anzugeben, durch welches ein derartiges Bohrwerkzeug in einfacher Weise und kostengünstig hergestellt wird.

Diese Aufgabe wird durch ein Bohrwerkzeug gemäß den kennzeichnenden Merkmalen des Anspruchs 1 gelöst. Die Ausbildung einer Überdeckung von einem Spanraum im vorderen Bereich des Bohrerschaftes ermöglicht eine höhere Steifigkeit des Bohrerschaftquerschnittes. Die beiden im wesentlichen einander gegenüberliegend angeordneten Schneidkanten der Wendeschneidplatten können dadurch während des Schneidvorganges im wesentlichen in ihrer durch den Querschnitt des Bohrschaftes gegebenen Positionierung gehalten werden. Dadurch kann eine Schwingungserregung auf ein Minimum reduziert werden. Dies hat den Vorteil, daß die Schnittkraft bzw. der Schneideingriff im wesentlichen über den gesamten Bohrvorgang konstant gehalten werden kann, wodurch die an den Schneidkanten angreifende resultierende Kraft ebenso eine im wesentlichen konstante Größe aufweist. Durch diesen schwingungsberuhigten Bohrvorgang kann eine Erhöhung der Vorschubkraft und somit eine Verkürzung der Bohrzeit ermöglicht sein, wobei gleichzeitig der Bohrgrund als auch die Bohrwandung von hoher Qualitätsstufe sind und insbesondere der Bohrgrund frei von Rattermarken ist

Eine vorteilhafte Ausführungsform der Erfindung ist es, daß ein der radial inneren Wendeschneidplatte zugeordneter Innenspanraum in einen der radial äußeren Wendeschneidplatte zugeordneten Außenspanraum übergeht Der Außenspanraum erstreckt sich dabei vorteilhafterweise längs der Bohrerlängsachse, wobei der Innenspanraum vorteilhafterweise eine Steigung aufweist, damit der im vorderen Bereich um im wesentlichen 180° versetzt zu dem Außenspanraum angeordnete Innenspanraum in den Außenspanraum übergehen kann. Dadurch kann im hinteren Bereich des Bohrerschaftes wiederum eine Querschnittsvergrößerung erzielt werden, die eine wesentliche Erhöhung der Steifigkeit des Bohrwerkzeuges ermöglicht.

Eine weitere vorteilhafte Ausführungsform der Erfindung sieht vor, daß der Übergangsbereich von den Innenspanraum in den Außenspanraum im mittleren bis hinteren Bereich des Bohrerschaftes vorgesehen sein kann, so daß ein hinterer Bereich des Bohrerschaftes mit einem 3/4-Querschnitt vorgesehen sein kann, der im Verhältnis zu dem Querschnitt im vorderen Bereich des Bohrerschaftes groß ausgebildet ist Der sich an den Übergangsbereich anschließende gemeinsame Spanraum entspricht im wesentlichen der Größe des Außenspanraumes und verläuft vorteilhafterweise in seiner Größe konstant über die Restlänge des Bohrerschaftes.

Eine weitere vorteilhafte Ausführungsform des Bohrwerkzeuges sieht vor, daß der Übergangsbereich zwischen dem Innenspanraum und dem Außenspanraum groß ausgebildet ist, so daß die abzuführenden und in diesem Bereich aufeinandertreffende Späne weiterhin gut abgeführt werden können, ohne daß es zu einem Spänestau oder einer Knäuelbildung kommt. Die dabei auftretenden, auf den Bohrerschaft einwirkenden Kräfte, die durch das Aufeinandertreffen der Späne des Innen- und Außenspanraumes auftreten könnten, werden von dem Bohrerschaft problemlos aufgenommen, der in diesem Bereich bereits aufgrund des 3/4-Querschnitts bzw. nur einem gemeinsamen Spanraum eine hohe Steifigkeit aufweist.

Nach einer weiteren vorteilhaften Ausgestaltung der Erfindung ist vorgesehen, daß die Winkelhalbierenden der gleich langen Schneidkanten der radial inneren und äußeren Wendeschneidplatten gemeinsam gegenüber der Längsachse des Bohrerschaftes um einen geringen Winkel geneigt sind. Durch diese Verdrehung, insbesondere bei der Anordnung der Wendeschneidplatten, die radial zur Längsachse des Bohrerschaftes gesehen um in etwa 172° einander versetzt angeordnet sind, kann bewußt ein Eingriff der Wendeschneidplatten gewählt werden, bei dem die resultierenden Radialkraftkomponenten von Null verschieden sind. Dadurch können Bohrlöcher geschnitten werden, deren Durchmesser geringfügig größer als der Bohrerdurchmesser ist. Beim Herausziehen des Bohrwerkzeuges aus dem Bohrloch können dadurch keine Rückzugsriefen mehr auftreten.

In den weiteren Unteransprüchen und der Beschreibung sind weitere vorteilhafte Ausgestaltungen und Weiterbildungen des erfindungsgemäßen Bohrwerkzeuges angegeben.

In den Zeichnungen ist ein bevorzugtes Ausführungsbeispiel dargestellt. Es zeigen:
- Fig. 1: eine Seitenansicht des erfindungsgemäßen Bohrwerkzeuges,
- Fig. 2: eine Stimansicht des Bohrwerkzeuges nach Fig. 1,
- Fig. 3: einen schematischen Querschnitt des Bohrwerkzeuges entlang der Linie III-III in Fig. 1,
- Fig. 4: eine perspektivische Ansicht auf einen vorderen Bereich des erfindungsgemäßen Bohrwerkzeuges und
- Fig. 5: eine schematische Darstellung des erfindungsgemäßen Bohrwerkzeuges mit symmetrischer Verdrehung der Wendeschneidplatten.

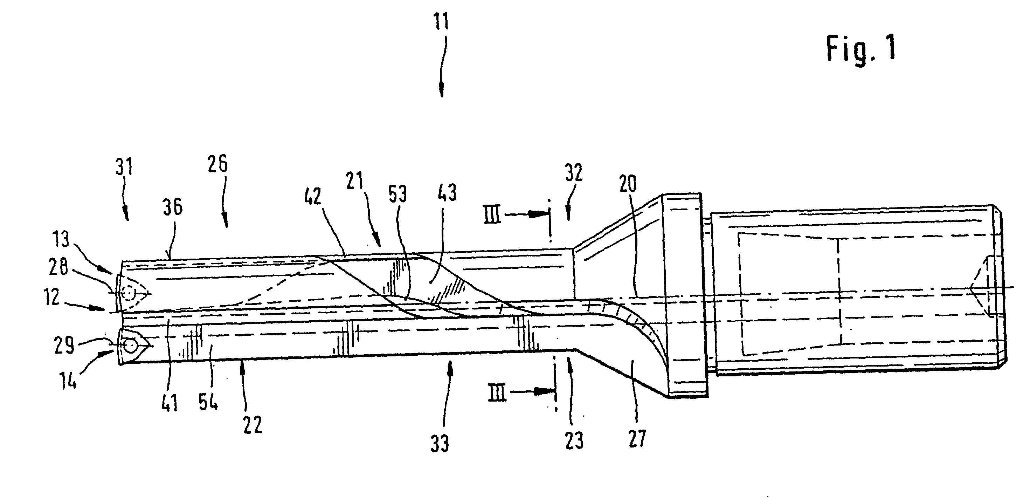

In Fig. 1 ist ein erfindungsgemäßes Bohrwerkzeug 11 dargestellt, an dessen Stirnseite 12 zwei Wendeschneidplatten 13, 14 angeordnet sind, die in einem Winkel von 172° zueinander versetzt sind. Die sechseckigen Wendeschneidplatten 13, 14 weisen zwei im wesentlichen gleich lange Schneidkanten 16, 17; 18, 19 auf, die in einem Dachwinkel zueinander angeordnet sind. Eine radial äußere Wendeschneidplatte 14 bestimmt den Bohrdurchmesser. Eine radial innere Wendeschneidplatte 13 ist derart angeordnet, daß deren radial innere Schneidkante 16 geringfügig über eine Bohrerachse bzw. Schaftlängsachse 20 hinausragt. Die Wendeschneidplatten 13, 14 weisen einen überlappenden Arbeitsbereich auf.

Der äußeren Wendeschneidplatte 14 ist eine Ausnehmung 22 zur Spanabfuhr zugeordnet, die im folgenden als Außenspanraum bezeichnet wird. Der Außenspanraum 22 erstreckt sich längs der Schaftlängsachse 20 über den gesamten Bohrerschaft 26 und geht in einen Auslauf 27 über.

Der inneren Wendeschneidplatte 13 ist ebenfalls eine Ausnehmung 21 zugeordnet, die im folgenden als Innenspanraum bezeichnet wird. Der Innenspanraum 21 weist eine die Wendeschneidplatte 13 aufnehmende Begrenzungswand 53 und eine im wesentlichen rechtwinklig dazu angeordnete Seitenfläche 43 auf. In seinem Verlauf von einem vorderen Bereich 31 in den hinteren Bereich 32 des Bohrerschaftes 26 gesehen weist dieser eine gewindeähnliche Steigung auf. In einem Übergangsbereich 33 geht der Innenspanraum 21 in den Außenspanraum 22 über, wodurch die Spanabfuhr im hinteren Bereich 32 des Bohrerschaftes 26 über einen gemeinsamen Spanraum 23 erfolgt. Der gemeinsame Spanraum 23 ist vorteilhafterweise die Fortsetzung des Außenspanraumes 22. Alternativ kann vorgesehen sein, daß sowohl der Innenspanraum 21 als auch der Außenspanraum 22 einen Drallwinkel aufweisen und in einen gemeinsamen Spanraum 23 übergehen, der im Querschnitt auch größer ausgebildet sein kann. Der gemeinsame Spanraum 23 kann sowohl geradlinig zu der Bohrerlängsachse 20 als auch unter einen Drallwinkel zum Spanauslauf 27 übergeführt werden.

Der Innenspanraum 21 weist eine Überdeckung 36 auf, die sich zumindest teilweise über die Länge des Innenspanraumes 21 in Achslängsrichtung gesehen erstreckt. Vorteilhafterweise erstreckt sich die Überdeckung 36 bis in den Übergangsbereich 33, so daß der an der inneren Wendeschneidplatte 13 anfallende Span innerhalb eines kanalartig ausgebildeten Spanraumes 21 geführt wird. Aufgrund der zu dem Innenspanraum 21 angeordneten Überdeckung 36 ist ein geschlossenes System geschaffen worden. Der Innenspanraum weist einen Rechtsdrall mit einem Winkel im Bereich von 20° bis 40° auf, damit in dem geschlossenen System eine Förderwirkung für die Spanabfuhr gegeben ist.

Die Überdeckung 36 weist desweiteren den Vorteil auf, daß die ablaufenden Späne nicht gegen die Bohrungswand gedrückt werden, sondern in diesem Kanal abgeführt werden können, wodurch weitere Reaktionskräfte auf den Bohrerschaft 26 vermieden werden und das Bohrwerkzeug 11 somit wesentlich ruhiger laufen kann. Diese Überdeckung 36 stellt vorteilhafterweise eine Maßnahme dar, die zur Schwingungsberuhigung oder Vermeidung von Schwingungen bzw. deren Erregung vorgesehen ist.

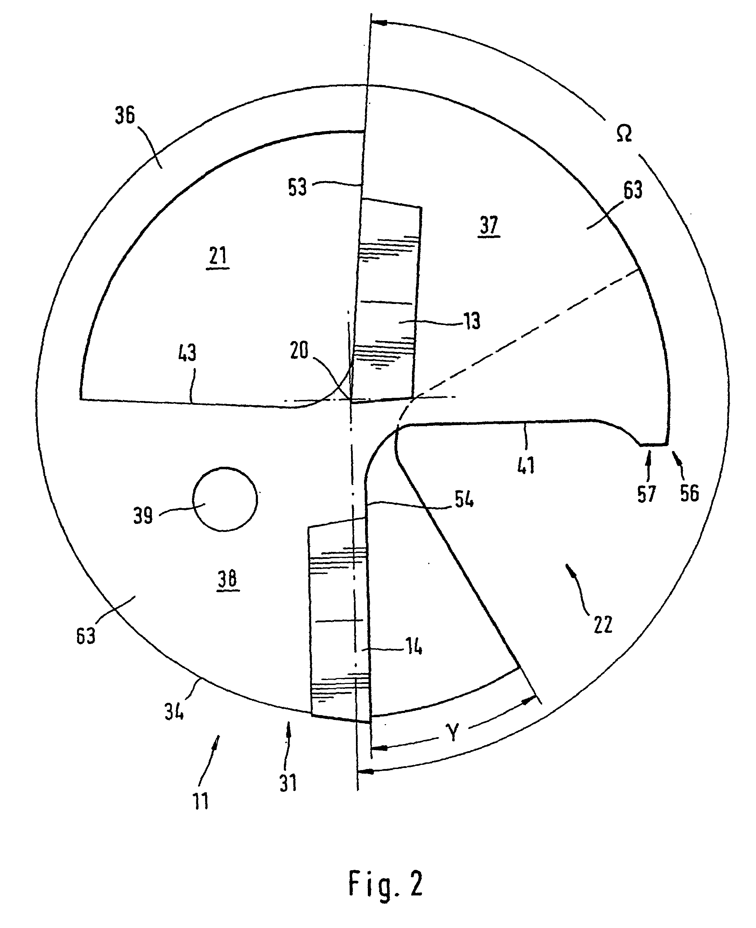

In Fig. 2 ist eine Stirnansicht des erfindungsgemäßen Bohrwerkzeuges 11 dargestellt. Die an dem Innenspanraum 21 angeordnete Überdeckung 36 geht fließend in die Mantelfläche 34 des Bohrerschaftes 26 über. Die Wandstärke der Überdeckung 36 weist bei dem erfindungsgemäßen 5 x D-Bohrwerkzeug eine Wandstärke in einem Bereich zwischen 0,5 mm und 4 mm auf, wobei vorzugsweise im dünnsten Bereich eine Wandstärke von 1 mm nicht unterschritten ist. Aufgrund der Überdeckung 36 kann eine wesentliche Versteifung des Bohrgrundkörpers im vorderen Bereich, die bei dem erfindungsgemäßen Bohrwerkzeug einen Winkel Ω von 172° beträgt, erreicht werden. Dadurch ist das Widerstandsmoment der beiden Viertelkreisquerschnitte 37, 38 um ein wesentliches erhöht. Ein Abweichen der in einem bestimmten Winkel zueinander angeordneten Schneidenanordnung kann damit weitgehendst unterbunden werden, wodurch wiederum eine Schwingungsverringerung und gleichzeitig eine Schnittkrafterhöhung erzielt werden kann. Dies beruht auch darauf, daß das ansich geringe im Innenspanraum 21 liegende Trägheitsmoment erhöht wird.

Die Winkelanordnung von 172° hat des weiteren den Vorteil, daß der Innenspanraum 21 geöffnet bzw. vergrößert wird, wodurch ein begünstigter Spanablauf an der inneren Wendeschneidplatte ermöglicht und eine Schwingungsberuhigung gegeben ist.

Zur Kühlung des Bohrwerkzeuges 11 während des Schneideinsatzes ist eine Kühlflüssigkeitsbohrung 39 in einem die radial äußere Wendeschneidplatte 14 aufnehmenden Viertelkreisquerschnitt 63 vorgesehen. Eine Kühlflüssigkeitsbohrung 39 in einem die radial innere Wendeschneidplatte 13 aufnehmenden Viertelkreisquerschnitt wird überwiegend aufgrund der Steigung des Innenspanraumes 21, der in den Außenspanraum 22 übergeht, nicht ermöglicht.

Der Innenspanraum 21 geht vorteilhafterweise im mittleren bis hinteren Bereich in den Außenspanraum 22 über, so daß der hintere Bereich 32 des Bohrerschaftes 26 in etwa ein Drittel ± 20% der Gesamtlänge des Bohrerschaftes 26 aufweisen kann. Aufgrund der Erhöhung der Steifigkeit im zumindest hinteren Bereich 32 des Bohrerschaftes 26 kann die Bohrerstabilität erhöht werden, wodurch wiederum eine Verringerung der Schwingungserregung ermöglicht ist, so daß eine weitere Qualitätssteigerung des Bohrwerkzeuges 11 gegeben ist.

Die Überdeckung 36 kann den Innenspanraum 21 soweit überdecken, daß der Übergangsbereich 33 ausschließlich in der Ebene einer Seitenfläche 41 des Außenspanraumes 22 liegt, die einer die radial äußere Wendeschneidplatte 14 aufnehmenden Begrenzungswand 54 gegenüberliegend angeordnet ist.

Alternativ kann ebenso vorgesehen sein, daß die Stirnseite 42 der Überdeckung 36, die gemäß dem bevorzugten Ausführungsbeispiel in der Seitenfläche 41 liegt, zu dieser Seitenfläche 41 zurückversetzt angeordnet ist, so daß der Innenspanraum 21 nur teilweise überdeckt ist.

Ferner kann vorgesehen sein, daß die Stirnseite 42 gegenüber der zuvor beschriebenen axial sich erstreckenden Seitenfläche 41 radial erstreckt, so daß ebenso der Innenspanraum 21 nur teilweise überdeckt ist und ein größerer Übergangsbereich 33 geschaffen werden kann.

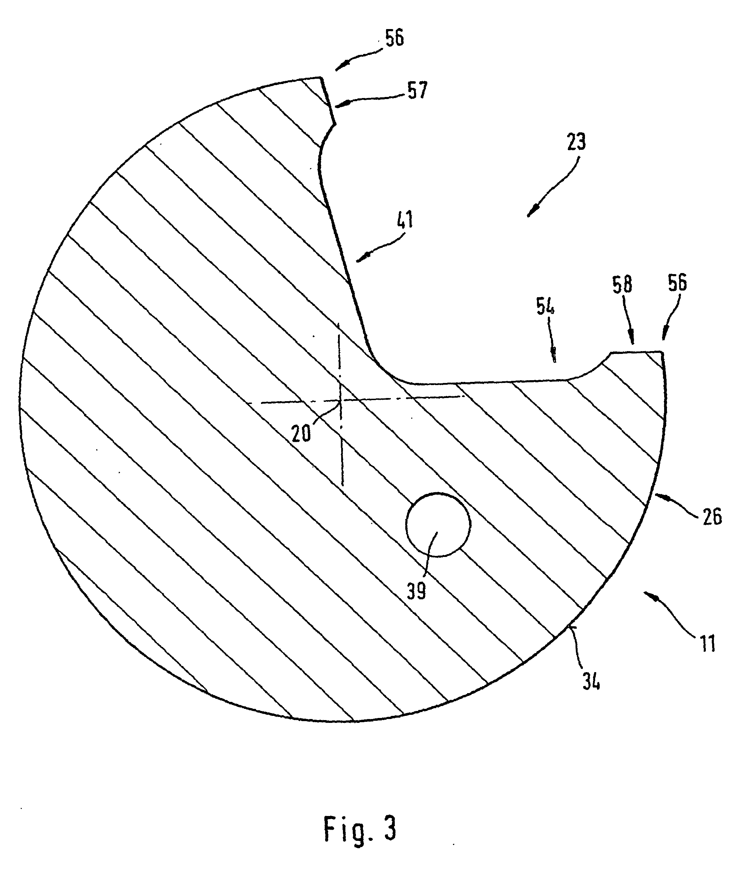

In Fig. 3 ist ein schematischer Querschnitt des Bohrwerkzeuges 11 entlang der Linie III-III in Fig. 1 dargestellt. In diesem Bereich ist der Querschnitt als ein annähernd Dreiviertel-Vollquerschnitt des Bohrerschaftes 26 ausgebildet. Der gemeinsame Spanraum 23 schließt sich unmittelbar an den Außenspanraum 22 an und weist im wesentlichen das gleiche Spanablaufvolumen auf. Eine Seitenfläche 41 und eine Begrenzungswand 54, in der im vorderen Bereich 31 des Bohrerschaftes 26 die Wendeschneidplatte 14 angeordnet ist, bildet den gemeinsamen Außenspanraum 23. Diese Seitenfläche 41 und Begrenzungswand 54 sind in etwa rechtwinklig zueinander angeordnet und bilden einen Spanraum, der gemäß der Fig. 3 im wesentlichen dem ersten Quadranten des XY-Achsen-Koordinaten-Systems entspricht. An den äußeren Randzonen 56 der Seitenfläche 41 und Begrenzungswand 54 sind jeweils eine Versteifungswulst 57, 58 vorgesehen. Die Versteifungswulst 57, die der Seitenfläche 41 zugeordnet ist, erstreckt sich über die gesamte Länge des Bohrerschaftes 26 und ermöglicht dadurch eine Erhöhung des Widerstandsmoments als auch des Trägheitsmoments. Die Versteifungswulst 57 ist entlang des Bohrerschaftes 26 durchgehend ausgebildet, sofern eine Stirnseite 42 der Überdeckung 36 in der Seitenfläche 41 liegt. Sofern dies nicht der Fall ist, kann die Versteifungswulst 57 bis in den Übergangsbereich 33 reichen.

Die Versteifungswulst 58, die an der Begrenzungswand 54 vorgesehen ist, kann sich vorteilhafterweise bis in den vorderen Bereich 31 der Wendeschneidplatte 14 erstrecken. Ebenso kann vorgesehen sein, daß diese Versteifungswulst 58 im Übergangsbereich 33 endet. Die Versteifungswulst 57, 58 ist streifenförmig ausgebildet und weist eine geringfügige Erhöhung gegenüber den Seitenflächen 41, 54 auf. Im Übergangsbereich von der Seitenfläche 41 und Begrenzungswand 54 zu den Versteifungswülsten 57, 58 ist ein fließender Übergang geschaffen. Der äußere Randbereich 56 der Versteifungswulst 57, 58 schließt sich unmittelbar an eine Mantelfläche 34 des Bohrerschaftes 26 an und kann dadurch eine weitere Führungsfläche bilden. Die Erhöhung der Versteifungswulst 57, 58 gegenüber der Seitenfläche 41, 54 kann im Bereich von wenigen Millimetern liegen. Die Breite der Versteifungswulst 57, 58 ist gegenüber der Seitenfläche 41, 54 klein ausgebildet, so daß der Spanraum 23 in seiner Größe im wesentlichen vollständig erhalten bleibt. Zusätzlich wird dadurch um einen wesentlichen Betrag das Trägheits- und Widerstandsmoment erhöht.

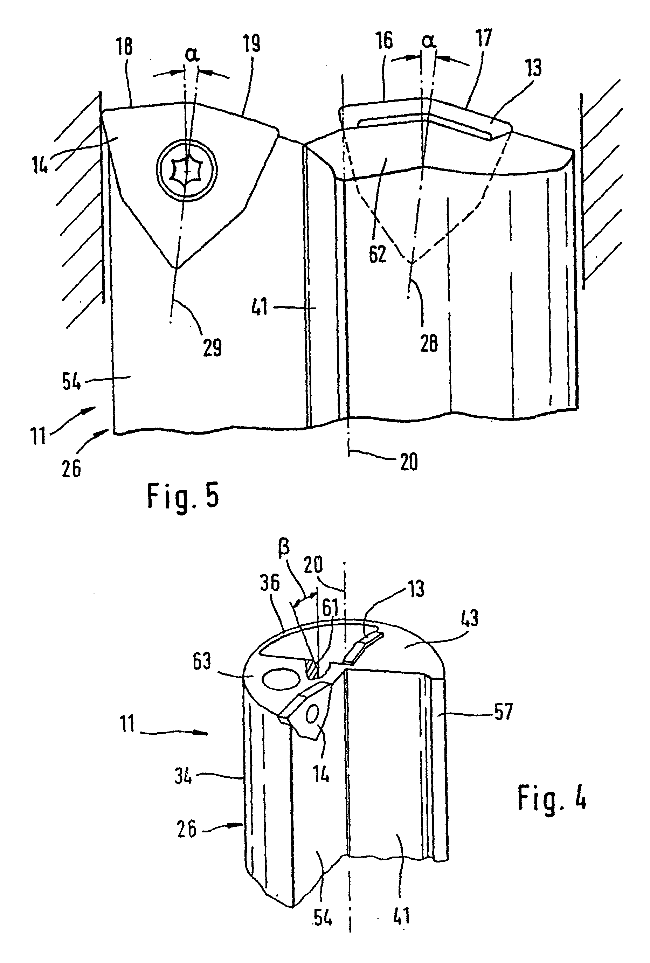

In Fig. 5 ist ein vorderer Bereich 31 des erfindungsgemäßen Bohrwerkzeuges 11 dargestellt. Die Wendeschneidplatten 131 14 sind mit einem Klemmbolzen umsetzbar- und auswechselbar befestigt Die Wendeschneidplatten 13, 14 stehen jeweils mit zwei Schneidkanten 16, 17; 18, 19 im Schneideingriff, wobei die Wendeschneidplatte 13 einen an die Bohrerlängsachse 20 angrenzenden und diese in geringem Umfang übergreifenden Bereich schneidet und die Wendeschneidplatte 14 den Bereich der Bohrung schneidet, der an den Bohrerumfang heranreicht. Die einzelnen Arbeitsbereiche der Wendeschneidplatten 13, 14 überdecken sich in ihren Arbeitsbereichen. Die Wendeschneidplatten 13, 14 weisen bezüglich ihrer Schneidkanten 16, 17 und 18, 19 jeweils eine Winkelhalbierende 28, 29 auf, die gegenüber einer Schaftlängsachse 20 in einen Bereich zwischen 0° und 10°, vorzugsweise um 4°, gegenüber der Bohrerlängsachse 20 gemeinsam verdreht ist. Dadurch kann in Zusammenhang mit der Wendeschneidplattenanordnung von einem Winkel Ω im Bereich von 165° bis 185°, vorzugsweise von 172°, erreicht werden, daß die Summe der aus allen in Eingriff stehenden wirksamen Schneidkanten 16, 17; 18, 19 resultierenden Radialkraftkomponenten von Null verschieden ist. Dadurch kann erreicht werden, daß der Bohrer 11 während des Bohrvorganges mit einem etwas größeren Durchmesser beim Bohren arbeitet. Hierdurch entsteht der Vorteil, daß das Bohrwerkzeug nicht in der Bohrung klemmen kann und beim Herausziehen des Bohrerschaftes keine Rückzugsriefen in der Bohrungswand auftreten können.

Im folgenden ist nun das erfindungsgemäße Verfahren zur Herstellung eines 5 x D-Bohrwerkzeuges 11 mit einer Überdeckung beschrieben. Es versteht sich von selbst, daß dieses Verfahren nicht nur auf dieses Bohrwerkzeug begrenzt ist.

Das Ausgangsmaterial zur Herstellung eines Bohrwerkzeuges 11 ist ein Rundstab, der aus für das Bohrwerkzeug 11 bekanntem und geeignetem Material hergestellt ist. Dieser Rundstab wird in dessen Mitte zentriert und nachfolgend eine axial über den Bohrerschaft 26 sich erstreckende Außenspannut 22 gefräst, die den Außenspanraum bildet und in dem Auslauf 27 endet.

Nach Anbringung des Außenspanraumes 22 wird der Innenspanraum 21 eingefräst, wobei der im vorderen Bereich 31 zunächst im wesentlichen um 180° zu dem Außenspanraum 22 versetzt angeordnete Innenspanraum 21 mit einer im wesentlichen konstanten Steigung gefräst wird, so daß er in einem Übergangsbereich vorteilhafterweise im mittleren Bereich des Bohrerschaftes 26 in den Außenspanraum 22 übergeht und eine gute Förderwirkung für die Spanabfuhr erzielt werden kann. Dabei kann vorieilhafterweise vorgesehen sein, daß der Innenspanraum 21 von der Stirnseite 12 des Bohrwerkzeuges 11 gesehen zunächst geradlinig verläuft, bevor dieser aufgrund der Steigung in eine geneigte Fläche übergeht.

Im vorderen Bereich 31 des Bohrerschaftes 26 wird ein Durchmesserbereich abgedreht, auf den eine Hülse, die zur Bildung der Überdeckung 36 dient, aufgebracht wird. In Abhängigkeit des Überdeckungsgrades bzw. der Ausbildung des Übergangsbereiches 33 erstreckt sich der abgedrehte Durchmesserbereich entlang der Längsachse 20 auf den hinteren Bereich 32 des Bohrerschaftes 26 zu. Die Hülse wird auf den abgedrehten Durchmesserbereich form- und/oder kraftschlüssig aufgebracht. Dies kann durch bekannte Verfahren, wie Aufschweißen, Schrumpfen, Löten oder dergleichen erfolgen.

Der Rundstab wird nun außermittig zu dem vorherigen Arbeitsgang für den weiteren Arbeitsgang eingespannt, so daß der Rundstab exzentrisch zu seiner Längsachse des ersten Arbeitsganges von der Bearbeitungsmaschine aufgenommen ist. Der exzentrisch in einer Drehmaschine aufgenommene Rundstab wird nun vollständig überdreht, so daß eine gemeinsame Mantelfläche 34 des Bohrwerkzeuges 11 gebildet wird, die sich über die gesamte Länge des Bohrerschaftes 26 erstreckt. Der Spanraum 22 wird somit freigelegt (durch Durchbrechen der Hülse), wobei der Spanraum 21 weiterhin durch die Hülse überdeckt ist.

Somit kann in einer geringen Anzahl von Fertigungsschritten ein Bohrer geschaffen werden, der eine hohe Steifigkeit und eine geringe Schwingungserregung aufweist, der zudem kostengünstig herstellbar ist.

## Patentansprüche

1. Bohrwerkzeug für Bohrungen in Metallvollmaterial mit einem Bohrerschaft (26), mit wenigstens zwei an der Stirnseite (12) des Bohrerschaftes (26) verschiedenem Radialabstand zueinander angeordnete, geometrisch zumindest ähnliche Wendeschneidplatten (13, 14), deren Arbeitsbereiche sich überdecken und von den jede zwei gleich lange Schneidkanten (16,17,18,19) aufweist, die benachbart und im stumpfen Winkel zueinander geneigt sind und die gleichzeitig in Eingriff stehen, wobei die radial innere Wendeschneidplatte (13) mit ihrer einen in Eingriff stehenden Schneidkante (16) die Bohrerachse (20) geringfügig überschreitet, wobei die radial äußere Wendeschneidplatte mit ihrer einen in Eingriff stehenden Schneidkante (18) den Bohrerdurchmesse bildet, mindestens eine der Winkelhalbierenden (28,29) der Schneidkanten (16,17,18,19) einer Wendeschneidplatte (13,14) gegen die Bohrerlängsachse (20) um einen Winkel (α) geneigt ist, mit jeweils einer der Wendeschneidplatten (13,14) zugeordneten Ausnehmung (21,22), die an eine Mantelfläche (34) des Bohrerschaftes (26) angrenzen und mit zumindest einer Ausnehmung (21,22), welche sich über den gesamten Bohrerschaft (26) bis zum Auslauf (27) an die Mantelfläche (34) angrenzend erstreckt, **dadurch gekennzeichnet, daß** zumindest eine Ausnehmung (21,22), eine Überdeckung (36) ausweist, die sich zumindest teilweise über die Länge der Ausnehmung (21,22) erstreckt.

2. Bohrwerkzeug nach Anspruch 1 **dadurch gekennzeichnet, daß** die Überdeckung (36) eine der radial inneren Wendeschneidplatte (13) zugeordneten Ausnehmung (21) überdeckt.

3. Bohrwerkzeug nach Anspruch 1 **dadurch gekennzeichnet, daß** die der radial äußeren Wendeschneidplatte (14) zugeordnete Ausnehmung (22) und die der radial inneren Wendeschneidplatte (13) zugeordnete Ausnehmung (21) in eine gemeinsame Ausnehmung (23) übergehen.

4. Bohrwerkzeug nach Anspruch 3 **dadurch gekennzeichnet, daß** die gemeinsame Ausnehmung (23) die Fortsetzung der der radial äußeren Wendeschneidplatte (14) zugeordneten Ausnehmung (22) ist.

5. Bohrwerkzeug nach einem der vorhergehenden Ansprüche, **dadurch gekennzeichnet. daß** sich die Überdeckung (36) in Schaftlängsachse (20) wenigstens über ein Viertel der Länge des Bohrerschaftes (22) erstreckt.

6. Bohrwerkzeug nach einem der vorhergehenden Ansprüche, **dadurch gekennzeichnet, daß** die Ausnehmung (21) eine in einen sich im wesentlichen axial zur Schaftlängsachse (20) erstreckende Ausnehmung (22) führende Steigung aufweist.

7. Bohrwerkzeug nach einem der vorhergehenden Ansprüche, **dadurch gekennzeichnet, daß** die Überdeckung (36) eine Wandstärke von 0,5 mm bis 4 mm aufweist.

8. Bohrwerkzeug nach einem der vorhergehenden Ansprüche, **dadurch gekennzeichnet, daß** die Überdeckung (36) sich bis in eine Seitenfläche (41) der Ausnehmung (22) erstreckt.

9. Bohrwerkzeug nach einem der vorhergehenden Ansprüche, **dadurch gekennzeichnet, daß** die Überdeckung (36) als ein Teil des Bohrerschaftes (26) ausgebildet ist.

10. Bohrwerkzeug nach Anspruch 1, **dadurch gekennzeichnet, daß** die axial sich erstreckende Ausnehmung (22) zumindest an einer der Wendeschneidplatte (14) gegenüberliegenden Seitenfläche (41) eine an eine Mantelfläche (34) des Bohrerschaftes (26) angrenzende, sich axial zumindest teilweise über die gesamte Länge der Ausnehmung (22) erstreckende Versteifungswulst (57) aufweist.

11. Bohrwerkzeug nach Anspruch 10, **dadurch gekennzeichnet, daß** sich die Versteifungswulst (57) über die gesamte Länge des Bohrerschaftes (26) erstreckt.

12. Bohrwerkzeug nach Anspruch 10, **dadurch gekennzeichnet, daß** die Versteifungswulst (57) im Verhältnis zur Breite der Seitenfläche (41) schmal ausgebildet ist

13. Bohrwerkzeug nach Anspruch 10, **dadurch gekennzeichnet, daß** die Versteifungswulst (57) das Trägheitsmoment und/oder Widerstandsmoment des Bohrer schaftes (26) erhöht.

14. Bohrwerkzeug nach Anspruch 10, **dadurch gekennzeichnet, daß** eine äußere Randzone der Versteifungswulst (57) einen Teil der Mantelfläche (34) des Bohrerschaftes (26) bildet und als Führungsfläche ausgebildet ist.

15. Bohrwerkzeug nach Anspruch 10, **dadurch gekennzeichnet, daß** die Versteifungswulst (57) gegenüber der Seitenfläche (41) der Ausnehmung (22) weniger als drei Millimeter hervorsteht.

16. Bohrwerkzeug nach Anspruch 10, **dadurch gekennzeichnet, daß** die Versteifungswulst (57) sich bis zum Übergangsbereich (33) erstreckt.

17. Bohrwerkzeug nach Anspruch 1, **dadurch gekennzeichnet, daß** der Bohrerschaft (26) zumindest zwei im wesentlichen diametral einander gegenüberliegende Ausnehmungen (21, 22) aufweist, deren Begrenzungswand (53, 54) im wesentlichen rechtwinklig zu seinen Seitenflächen (41, 43) zumindest teilweise entlang des Bohrerschaftes (26) angeordnet ist.

18. Bohrwerkzeug nach Anspruch 17, **dadurch gekennzeichnet, daß** ein im vorderen Bereich (31) des Bohrerschaftes (26) die radial äußere Wendeschneidplatte (14) aufnehmender Vierteilkreis-Segmentabschnitt (63) eine Kühlflüssigkeitsbohrung (39) aufweist.

19. Bohrwerkzeug nach Anspruch 17, **dadurch gekennzeichnet, daß** die Begrenzungsflächen (53, 54) und Seitenflächen (41, 43) im wesentlichen klein ausgebildet sind.

20. Verfahren zur Herstellung eines Bohrwerkzeuges nach einem der Ansprüche 1 bis 19, **dadurch gekennzeichnet, daß**
- ein Rundstab mittig zentriert wird,
- eine sich von der Stirnseite (12) des Bohrwerkzeuges (11) entlang des Bohrerschaftes (26) erstreckende Ausnehmung (22) zur Spanabfuhr gefräst wird,
- eine an der Stimseite (12) des Bohrwerkzeuges (11) um einen im wesentlichen gleichen Umfangswinkel gegeneinander versetzt und sich zumindest teilweise entlang des Bohrerschaftes (26) erstreckende Ausnehmungen (21) zur Spanabfuhr gefräst wird, wobei die Ausnehmungen (21, 22) in einem hinteren Bereich (32) des Bohrerschaftes (26) in eine gemeinsame Ausnehmung (23) übergeführt wird,
- ein von der Stirnseite (12) des Bohrerschaftes (26) zumindest teilweise sich entlang des Bohrerschaftes (26) erstreckender Abschnitt auf einen gegenüber dem Schaftdurchmesser verringerten Durchmesser abgedreht wird,
- auf diesen im Durchmesser verringerten Abschnitt eine Hülse kraft- und/oder formschlüssig aufgebracht wird,
- der Rundstab anschließend außermittig eingespannt wird,
- die Hülse und der Bohrerschaft (26) auf einer gemeinsamen Mantelfläche (36) des Bohrerschaftes (26) abgedreht wird.

## Claims

1. Drilling tool for drilling solid metal material, comprising a drill shank (26), at least two geometrically at least similar indexable inserts (13, 14) which are arranged at the end (12) of the drill shank (26), are at different radial distances from each other and whose working areas overlap and of which each has two equally long cutting edges (16, 17, 18, 19) which are adjacent and inclined at an obtuse angle to each other and which are in cutting engagement at the same time, the radially inner indexable insert (13) slightly overlapping the drill axis (20) with its cutting edge (16) in cutting engagement, the radially outer indexable insert forming the drill diameter with its cutting edge (18) in cutting engagement, at least one of the bisectors (28, 29) of the cutting edges (16, 17, 18, 19) of an indexable insert (13, 14) being inclined with respect to the drill longitudinal axis (20) at an angle (α), comprising a recess (21, 22) in each case associated with the indexable insert (13, 14), which adjoin an outer surface (34) of the drill shank (26), and comprising at least one recess (21, 22) which extends over the entire drill shank (26) as far as the outlet (27) and is adjacent to the outer surface (34), **characterized in that** at least one recess (21, 22) has a cover (36) which extends at least partly over the length of the recess (21, 22)

2. Drilling tool according to Claim 1, **characterized in that** the cover (36) covers a recess (21) associated with the radially inner indexable insert (13).

3. Drilling tool according to Claim 1, **characterized in that** the recess (22) associated with the radially outer indexable insert (14), and the recess (21) associated with the radially inner indexable insert (13) merge into a common recess (23).

4. Drilling tool according to Claim 1, **characterized in that** the common recess (23) is the continuation of the recess (22) associated with the radially outer indexable insert (14).

5. Drilling tool according to one of the preceding claims, **characterized in that** the cover (36) extends in the shank longitudinal axis (20), at least over one quarter of the length of the drill shank (26).

6. Drilling tool according to one of the preceding claims, **characterized in that** the recess (21) has a pitch leading into a recess (22) that extends substantially axially with respect to the shank longitudinal axis (20).

7. Drilling tool according to one of the preceding claims, **characterized in that** the cover (36) has a wall thickness of 0.5 mm to 4 mm.

8. Drilling tool according to one of the preceding claims, **characterized in that** the cover (36) extends as far as a side face (41) of the recess (22).

9. Drilling tool according to one of the preceding claims, **characterized in that** the cover (36) is designed as part of the drill shank (26).

10. Drilling tool according to Claim 1, **characterized in that** the recess (22) that extends axially, at least on a side face (41) lying opposite the indexable insert (14), has a stiffening bead (57) which adjoins an outer surface (34) of the drill shank (26) and extends axially at least to some extent over the entire length of the recess (22).

11. Drilling tool according to Claim 10, **characterized in that** the stiffening bead (57) extends over the entire length of the drill shank (26).

12. Drilling tool according to Claim 10, **characterized in that** the stiffening bead (57) is narrow in relation to the width of the side face (41).

13. Drilling tool according to Claim 10, **characterized in that** the stiffening bead (57) increases the moment of inertia and/or section modulus of the drill shank (26).

14. Drilling tool according to Claim 10, **characterized in that** an outer marginal zone of the stiffening bead (57) forms part of the outer surface (34) of the drill shank (26) and is designed as a guide surface.

15. Drilling tool according to Claim 10, **characterized in that** the stiffening bead (57) projects by less than three millimetres with respect to the side face (41) of the recess (22).

16. Drilling tool according to Claim 10, **characterized in that** the stiffening bead (57) extends as far as the transition area (33).

17. Drilling tool according to Claim 1, **characterized in that** the drill shank (26) has at least two recesses (21, 22) which lie substantially diametrically opposite each other and whose boundary wall (53, 54) is arranged substantially at right angles to its side faces (41, 43), at least to some extent along the drill shank (26).

18. Drilling tool according to Claim 17, **characterized in that** a quarter-circle segment section (63) accommodating the radially outer indexable insert (14) in the front area (31) of the drill shank (26) has a cooling liquid bore (39).

19. Drilling tool according to Claim 17, **characterized in that** the boundary surfaces (53, 54) and side faces (41, 43) are substantially small.

20. Method of producing a drilling tool according to one of Claims 1 to 19, **characterized in that**
- a round rod is centred,
- a recess (22) extending from the end (12) of the drilling tool (11) along the drill shank (26) is milled in order to carry away swarf,
- a recess (21.1) at the end (12) of the drilling tool (11), offset with respect to each other by substantially the same circumferential angle and extending at least to some extent along the drill shank (26) is milled in order to carry away swarf, the recesses (21, 22) merging into a common recess. (23) in a rear area (32) of the drill shank (26),
- a section extending from the end (12) of the drill shank (26) at least to some extent along the drill shank (26) is turned down to a diameter which is reduced as compared with the shank diameter,
- a sleeve is applied with a force fit and/or form fit to this section of reduced diameter,
- the round rod is subsequently clamped in eccentrically,
- the sleeve and the drill shank (26) are turned down to a common outer surface (36) of the drill shank (26).

## Revendications

1. Outil de perçage pour alésages dans un matériau en métal massif, comprenant une tige (26), avec au moins deux plaquettes de coupe amovibles (13, 14) au moins géométriquement similaires, disposées à une distance radiale différente l'une de l'autre sur la face frontale (12) de la tige (26), dont les zones de travail se recouvrent et dont chacune présente deux arêtes de coupe de même longueur (16, 17, 18, 19), qui sont voisines et inclinées l'une par rapport à l'autre suivant un angle obtus, et qui sont simultanément en engagement, la plaquette de coupe amovible radialement interne (13) dépassant légèrement de l'axe de l'outil 1 de perçage (20) avec l'une de ses arêtes de coupe (16) en prise, la plaquette de coupe amovible radialement extérieure formant le diamètre de perçage avec l'une de ses arêtes de coupe (18) en prise, au moins l'une des bissectrices (28, 29) des arêtes de coupe (16, 17, 18, 19) d'une plaquette de coupe amovible (13, 14) étant inclinée vers l'axe longitudinal de l'outil de perçage (20) suivant un angle (α), avec à chaque fois un logement (21, 22) associé à l'une des plaquettes de coupe amovibles (13, 14), adjacent à une surface d'enveloppe (34) de la tige (26) et avec au moins un logement (21, 22), qui s'étend en position adjacente à la surface d'enveloppe (34) sur toute la tige (26) jusqu'à la sortie (27), **caractérisé en ce qu'**au moins un logement (21, 22) présente un recouvrement (36) qui s'étend au moins partiellement sur la longueur du logement (21, 22).

2. Outil de perçage selon la revendication 1, **caractérisé en ce que** le recouvrement (36) recouvre un logement (21) associé à la plaquette de coupe amovible radialement interne (13).

3. Outil de perçage selon la revendication 1, **caractérisé en ce que** le logement (22) associé à la plaquette de coupe amovible radialement externe (14) et le logement (21) associé à la plaquette de coupe radialement interne (13) se prolongent en un logement commun (23).

4. Outil de perçage selon la revendication 3, **caractérisé en ce que** le logement commun (23) est la prolongation du logement (22) associé à la plaquette de coupe amovible radialement externe (14).

5. Outil de perçage selon l'une quelconque des revendications précédentes, **caractérisé en ce que** le recouvrement (36) s'étend dans l'axe longitudinal de la tige (20) au moins sur un quart de la longueur de la tige (26).

6. Outil de perçage selon l'une quelconque des revendications précédentes, **caractérisé en ce que** le logement (21) présente une inclinaison conduisant dans un logement (22) s'étendant essentiellement axialement par rapport à l'axe longitudinal de la tige (20).

7. Outil de perçage selon l'une quelconque des revendications précédentes, **caractérisé en ce que** le recouvrement (36) présente une épaisseur de paroi de 0,5 mm à 4 mm.

8. Outil de perçage selon l'une quelconque des revendications précédentes, **caractérisé en ce que** le recouvrement (36) s'étend jusque dans une face latérale (41) du logement (22).

9. Outil de perçage selon l'une quelconque des revendications précédentes, **caractérisé en ce que** le recouvrement (36) est réalisé sous forme d'une partie de la tige (26).

10. Outil de perçage selon la revendication 1, **caractérisé en ce que** l'évidement (22) s'étendant axialement présente au moins sur une face latérale (41) en regard de la plaquette de coupe amovible (14) un bourrelet de renfort (57) adjacent à une surface d'enveloppe (34) de la tige (26), s'étendant axialement au moins partiellement sur toute la longueur de l'évidement (22).

11. Outil de perçage selon la revendication 10, **caractérisé en ce que** le bourrelet de renfort (57) s'étend sur toute la longueur de la tige (26).

12. Outil de perçage selon la revendication 10, **caractérisé en ce que** le bourrelet de renfort (57) est mince par rapport à la largeur de la face latérale (41).

13. Outil de perçage selon la revendication 10, **caractérisé en ce que** le bourrelet de renfort (57) augmente le moment d'inertie et/ou le moment résistant de la tige (26).

14. Outil de perçage selon la revendication 10, **caractérisé en ce qu'**une zone périphérique extérieure du bourrelet de renfort (57) forme une partie de la surface d'enveloppe (34) de la tige (26) et est réalisée en tant que surface de guidage.

15. Outil de perçage selon la revendication 10, **caractérisé en ce que** le bourrelet de renfort (57) dépasse de moins de trois millimètres par rapport à la face latérale (41) du logement (22).

16. Outil de perçage selon la revendication 10, **caractérisé en ce que** le bourrelet de renfort (57) s'étend jusqu'à la zone de transition (33).

17. Outil de perçage selon la revendication 1, **caractérisé en ce que** la tige (26) présente au moins deux logements (21, 22) essentiellement diamétralement opposés, dont la paroi de limitation (53, 54) est disposée à angle droit par rapport à ses faces latérales (41, 43) au moins partiellement le long de la tige (26).

18. Outil de perçage selon la revendication 17, **caractérisé en ce qu'**une section de segment de quart de cercle (63) recevant dans la zone avant (31) de la tige (26) la plaquette de coupe amovible radialement externe (14) présente un alésage pour fluide de refroidissement (39).

19. Outil de perçage selon la revendication 17, **caractérisé en ce que** les faces de limitation (53, 54) et les faces latérales (41, 43) sont essentiellement petites.

20. Procédé de fabrication d'un outil de perçage selon l'une quelconque des revendications 1 à 19, **caractérisé en ce que**
- une barre ronde est centrée au milieu,
- un logement (22) pour l'évacuation des copeaux, s'étendant depuis la face frontale (12) de l'outil de perçage (11) le long de la tige (26) est fraisé,
- un logement (21) pour l'évacuation des copeaux, décalé mutuellement d'un angle périphérique essentiellement égal au niveau de la face frontale (12) de l'outil de perçage (11) et s'étendant au moins partiellement le long de la tige (26) est fraisé, les logements (21, 22) se prolongeant dans une zone arrière (32) de la tige (26) en un logement commun (23),
- une portion s'étendant depuis la face frontale (12) de la tige (26) au moins partiellement le long de la tige (26) *est* usinée au tour à un diamètre réduit par rapport au diamètre de la tige,
- sur cette portion de diamètre réduit, on place, par engagement par force et/ou positif, un manchon,
- la barre ronde est ensuite serrée de manière excentrique,
- le manchon et la tige (26) sont usinés au tour à une surface d'enveloppe commune (36) de la tige (26).
